(19) Europäisches Patentamt
European Patent Office
Office européen des brevets

(11) Veröffentlichungsnummer: **0 256 362**
**A2**

(12) # EUROPÄISCHE PATENTANMELDUNG

(21) Anmeldenummer: **87110820.5**

(22) Anmeldetag: **25.07.87**

(51) Int. Cl.⁴: **C08K 5/16**, C08K 5/09, B29C 33/60

(30) Priorität: **09.08.86 DE 3627078**

(43) Veröffentlichungstag der Anmeldung: **24.02.88 Patentblatt 88/08**

(84) Benannte Vertragsstaaten: **BE DE GB NL**

(71) Anmelder: **BAYER AG**
**Konzernverwaltung RP Patentabteilung**
**D-5090 Leverkusen 1 Bayerwerk(DE)**

(72) Erfinder: **Pilger, Friedhelm, Dr.**
**Schillingstrasse 37-39**
**D-5000 Köln 1(DE)**
Erfinder: **Kopp, Richard, Dr.**
**Bilharzstrasse 15**
**D-5000 Köln 80(DE)**
Erfinder: **Ganster, Otto, Dr.**
**Droste-Hülshoffstrasse 5**
**D-5068 Odenthal(DE)**

(54) **Verfahren zur Herstellung von Formkörpern auf Polyurethan- und/oder Polyharnstoff-Basis und die nach diesem Verfahren erhaltenen Formkörpern.**

(57) Ein neues Verfahren zur Herstellung von gegebenenfalls geschäumten Formkörpern mit einer geschlossenen Oberflächenschicht durch Umsetzung in geschlossenen Formen eines Reaktionsgemischs aus a) organischen Polyisocyanaten, b) Verbindungen mit gegenüber Isocyanatgruppen reaktionsfähigen Wasserstoffatomen, c) Formtrennmitteln und gegebenenfalls d) weiteren Hilfs-und Zusatzmitteln, wobei als Komponente c) Salze aus (i) gesättigten oder ungesättigten Carbonsäuren mit mindestens 8 Kohlenstoffatomen und (ii) tertiären Aminen, die mindestens einen, mindestens 12 Kohlenstoffatome aufweisenden aliphatischen Kohlenwasserstoffrest al Substituenten des Stickstoffatoms tragen, verwendet werden und die nach diesem Verfahren erhaltenen Formkörper.



Xerox Copy Centre

**Verfahren zur Herstellung von Formkörpern auf Polyurethan-und/oder Polyharnstoff-Basis und die nach diesem Verfahren erhaltenen Formkörper**

Die vorliegende Erfindung betrifft ein neues Verfahren zur Herstellung von gegebenenfalls geschäumten Formkörpern auf Basis von Polyurethanen und/oder von Polyharnstoffen mit einer geschlossenen Oberflächenschicht mit vorzüglichen Entformungseigenschaften durch Umsetzung in geschlossenen Formen eines gegebenenfalls schaumfähigen Reaktionsgemischs aus Polyisocyanaten, Verbindungen mit gegenüber Isocyanatgruppen reaktionsfähigen Wasserstoffatomen, inneren Formtrennmitteln und gegebenenfalls weiteren Hilfs-und Zusatzmitteln, wobei man als innere Formtrennmittel bestimmte Salze von organischen Carbonsäuren und tertiären Aminen verwendet.

Bei der Herstellung von Formkörpern auf Polyurethan-und/oder Polyharnstoff-Basis werden als Formwerkzeuge vorzugsweise solche aus Metall verwendet. Um beim Entformen ein Haften des Kunststoffteils an der Werkzeug oberfläche zu verhindern wird das Werkzeug häufig mit einem äußeren Trennmittel versehen. Es ist jedoch auch bekannt, die Wirkung dieser äußeren Trennmittel durch Mitverwendung sogenannter innerer Formtrennmittel zu verbessern bzw. die Verwendung von äußeren Trennmitteln weitgehend überflüssig zu machen.

So wird beispielsweise in der DE-OS 1 953 637 darauf hingewiesen, daß man auf das Auftragen eines äußeren Formtrennmittels verzichten kann, wenn man dem schaumfähigen Reaktionsgemisch bestimmte Zusatzstoffe beimischt, die dem fertigen Kunststoff vorzügliche Trenneigenschaften in Metallformen verleihen. Als derartige Zusatzstoffe wurden mindestens 25 C-Atome aufweisende Salze von aliphatischen Carbonsäuren mit vorzugsweise primären Aminen oder Amid-oder Estergruppen enthaltenden Aminen empfohlen.

Die DE-OS 2 121 670 empfiehlt die Verwendung von binären bzw. ternären Gemischen von verschiedenen inneren Formtrennmitteln, wobei als eine Komponente derartiger Gemische mindestens 20 aliphatische Kohlenstoffatome aufweisende Salze von aliphatischen Carbonsäuren und gegebenenfalls Amid-und/oder Estergruppen aufweisenden Aminen in Betracht kommen.

Die DE-OS 2 431 968 empfiehlt als innere Formtrennmittel bestimmte Salze aus gesättigten oder ungesättigten aliphatischen oder cycloaliphatischen Carbonsäuren mit mindestens 8 Kohlenstoffatomen und solchen tertiären Ami nen, die keine Amid-oder Estergruppen enthalten und bei denen das atomare Verhältnis von tertiärem Aminstickstoff zu Kohlenstoff im Aminmolekül zwischen 1:3 und 1:12 liegt.

Bei der weiteren Suche nach inneren Trennmitteln, die einen guten Trenneffekt erbringen, wurde nun festgestellt, daß Salze aus gesättigten oder ungesättigten aliphatischen oder cycloaliphatischen Carbonsäuren mit mindestens 8 Kohlenstoffatomen und solchen tertiären Aminen, die einen Kohlenwasserstoffrest mit mindestens 12 Kohlenstoffatomen als Substituenten aufweisen, besonders wirksame innere Formtrennmittel darstellen. Gegenüber den gemäß DE-OS 2 431 968 vorzugsweise eingesetzten Trennmitteln unterscheiden sich die nachstehend näher beschriebenen, erfindungsgemäß einzusetzenden Trennmittel insbesondere dadurch, daß die katalytische Wirkung der in den Salzen protoniert vorliegenden, tert. Amine von untergeordneter Bedeutung ist, so daß die Verwendung der erfindungsgemäß einzusetzenden Trennmittel ohne nennenswerten Einfluß auf die Reaktivität der Reaktionsgemische bleibt.

Gegenstand der vorliegenden Erfindung ist ein Verfahren zur Herstellung von gegebenenfalls geschäumten Formkörpern mit einer geschlossenen Oberflächenschicht durch Umsetzung in geschlossenen Formen eines Reaktionsgemischs aus

a) organischen Polyisocyanaten,

b) Verbindungen mit gegenübr Isocyanatgruppen reaktionsfähigen Wasserstoffatomen des Molekulargewichtsbereichs 62 bis 10 000,

c) Formtrennmitteln bestehend aus Salzen aus (i) gesättigten oder ungesättigten aliphatischen oder cycloaliphatischen Carbonsäuren oder Carbonsäuregemischen mit (im statistischen Mittel) mindestens 8 Kohlenstoffatomen pro Molekül und (ii) tertiären Aminen,

und gegebenenfalls

d) weiteren, aus der Polyurethanchemie an sich bekannten Hilfs-und Zusatzmitteln, dadurch gekennzeichnet, daß man als Trennmittel c) solche Salze verwendet, deren Aminkomponente (ii) aus tertiären Monoaminen oder Gemischen von tertiären Monoaminen der Formel

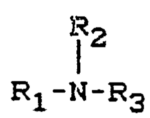

besteht, für welche
$R_1$ für einen gesättigten oder ungesättigten aliphatischen Kohlenwasserstoffrest mit mindestens 12 Kohlenstoffatomen steht und
$R_2$ und $R_3$ für gleiche oder verschiedene Reste stehen und gesättigte oder ungesättigte, vorzugsweise gesättigte aliphatische Kohlenwasserstoffreste mit 1 bis 18, vorzugsweise 1 bis 4 Kohlenstoffatomen, insbesondere Methylreste und/oder gegebenenfalls Etherbrücken aufweisende Hydroxyalkylreste mit 2 bis 40 Kohlenstoffatomen bedeuten.

Beim erfindungsgemäßen Verfahren kommen als Ausgangskomponente a) beliebige organische Polyisocyanate in Betracht, beispielsweise solche, wie sie von W. Siefken in Justus Liebigs Annalen der Chemie, (1949), 562, Seiten 75 bis 136, beschrieben werden. Geeignet sind beispielsweise die in US-PS 4 065 410, Kolonne 2, Zeile 34 - Kolonne 3, Zeile 22 beispielhaft genannten Polyisocyanate.

Vorzugsweise handelt es sich bei der Komponente a) um die technisch leicht zugänglichen Polyisocyanate der Polyurethanchemie, d.h. um 2,4-und/oder 2,6-Diisocyanatotoluol, sowie beliebige Gemische dieser Isomeren (TDI), um 4,4'-und/oder 2,4'-Diisocyanatodiphenylmethan, um Polyphenyl-polymethylen-polyisocyanate, wie sie durch Anilin-Formaldehyd-Kondensation und anschließende Phosgenierung hergestellt werden (rohes MDI) oder um Carbodiimid-, Urethan-, Allophanat-, Isocyanurat-, Harnstoff-oder Biuret-modifizierte Derivate dieser Polyisocyanate.

Zu den besonders bevorzugt einzusetzenden Polyisocyanaten a) gehören (i) Urethangruppen aufweisende Polyisocyanate, wie sie beispielsweise durch Umsetzung von überschüssigen Mengen an 4,4'-Diisocyanatodiphenylmethan bzw. von dessen technischen Gemischen mit 2,4'-Diisocyanatodiphenylmethan mit niedermolekularen, linearen oder verzweigten Alkandiolen, Dialkylenglykolen oder Polyoxyalkylenglykolen mit einem Molekulargewicht von bis zu 3000, insbesondere Polypropylenglykolen eines maximalen Molekulargewichts von 700, erhalten werden, (ii) 2,4-und/oder 2,6-Diisocyanatotoluol, (iii) Carbodiimid-bzw. Uretonimin-und/oder Isocyanuratgruppen aufweisende Polyisocyanate auf Basis von Gemischen aus 2,4'- und 4,4'-Diisocyanatodiphenylmethan, 2,4-und/oder 2,6-Diisocyanatotoluol und insbesondere auf Basis von 4,4'-Diisocyanatodiphenylmethan, (iv) Mischungen aus 2,4-und 2,6-Diisocyantotoluol mit 4,4'-und gegebenenfalls 2,4'-Diisocyanatodiphenylmethan oder um (v) Gemische der genannten Diisocyanatotoluole mit rohem MDI.

Bei der Ausgangskomponente b) handelt es sich um Verbindungen mit gegenüber Isocyanatgruppen reaktionsfähigen Wasserstoffatomen des Molekulargewichtsbereichs 62 bis 10 000. Es handelt sich hierbei um Verbindungen oder um Gemische von Verbindungen, welche mindestens 2, im allgemeinen (im statistischen Mittel) 2 bis 3 gegenüber Isocyanatgruppen reaktionsfähige Gruppen aufweisen. Bei den gegenüber Isocyanatgruppen reaktionsfähigen Gruppen handelt es sich um alkoholische, primäre oder sekundäre Hydroxylgruppen, primäre oder sekundäre Aminogruppen, Carboxylgruppen oder Thiolgruppen, vorzugsweise um primäre oder sekundäre Hydroxylgruppen und/oder um primäre oder sekundäre Aminogruppen, wobei sich die Begriffe "primär" bzw. "sekundär" im ersten Falle auf die Natur des mit der Hydroxylgruppe verknüpften Kohlenstoffatoms und im zweiten Falle auf die Aminogruppe selbst beziehen. Im allgemeinen handelt es sich bei der Komponente b) um Gemische aus b1) höhermolekularen Verbindungen, d.h. solchen des Molekulargewichtsbereichs 400 bis 10 000, vorzugsweise 1000 bis 6000 mit mindestens 2, vorzugsweise mit 2 bis 4 Hydroxyl-und/oder Aminogruppen der genannten Art mit b2) niedermolekularen, d.h. ein Molekulargewicht von 60 bis 399 aufweisenden Verbindungen mit mindestens 2, vorzugsweise 2 bis 4 Hydroxyl-und/oder Aminogruppen der genannten Art.

Geeignete höhermolekulare Verbindungen b1) sind insbesondere die aus der Polyurethanchemie an sich bekannten Polyesterpolyole oder Polyetherpolyole oder die aus der Polyisocyanatchemie bekannten Aminopolyether.

Die erfindungsgemäß in Betracht kommenden Polyhydroxypolyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von $BF_3$ oder durch Anlagerung dieser Epoxide, gegebenenfalls im Gemisch oder nacheinander, an Startkomponenten mit reaktionsfähigen Wasserstoffatomen, wie Alkohole oder Amine, z.B. Wasser, Ethylenglykol, Propylenglykol-(1,3) oder -(1,2), Trimethylolpropan, 4,4'-Dihydroxydiphenylpropan, Anilin, Ammoniak, Ethanolamin, Ethylendiamin hergestellt.

Auch Sucrosepolyether, wie sie z.B. in den deutschen Auslegeschriften 1 176 358 und 1 064 938 beschrieben werden, kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppe aufweisen. Auch durch Vinylpolymerisate modifizierte Polyether, wie sie z.B. durch Polymerisation von Styrol, Acrylnitril in Gegenwart von Polyethern entstehen (amerikanische Patentschriften 33 83 351, 33 04 273, 35 23 093, 31 10 695, deutsche Patentschrift 11 52 536), sind gegebenenfalls geeignet.

Bei den als Komponente b1) in Betracht kommenden Polyesterpolyolen handelt es sich um die bekannten Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niederen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls z.B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydro phthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester, Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, Cyclohexandimethanol (1,4-Bis-hydroxymethylcyclohexan), 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Methylenglykosid, ferner Diethylenglykol, Triethylenglykol, Tetraethylenglykol, Polyethylenglykol, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. ε-Caprolacton oder Hydroxycarbonsäuren, z.B. ω-Hydroxycapronsäure, sind einsetzbar.

Bei den ebenfalls als Komponente b1) einsetzbaren Aminopolyethern handelt es sich um Verbindungen des genannten Molekulargewichtsbereichs (bei dem Molekulargewicht handelt es sich jeweils um das mittlere, aus der Funktionalität und dem Gehalt an gegenüber Isocyanaten reaktionsfähigen Gruppen errechenbare Molekulargewicht), deren gegenüber Isocyanatgruppen reaktionsfähigen Gruppen zumindest zu 30, vorzugsweise zu 60 bis 100 Äquivalentprozent aus primären und/oder sekundären, vorzugsweise primären, aromatisch oder aliphatisch, vorzugsweise aromatisch gebundenen Aminogruppen und zum Rest aus primären und/oder sekundären, aliphatisch gebundenen Hydroxylgruppen bestehen.

In diesen Verbindungen können die die Aminogruppe tragenden, endständigen Reste mit der Polyetherkette auch über Urethan-oder Estergruppen verknüpft sein. Die Herstellung dieser "Aminopolyether" erfolgt in an sich bekannter Weise. So kann beispielsweise eine Aminierung von Polyhydroxylpolyethern wie z.B. Polypropylenglykolethern durch Reaktion mit Ammoniak in Gegenwart von Raney-Nickel und Wasserstoff durchgeführt werden (BE-PS 634 741). US-PS 3 654 370 beschreibt die Herstellung von Polyoxyalkylenpolyaminen durch Umsetzung des entsprechenden Polyols mit Ammoniak und Wasserstoff in Gegenwart eines Nickel-, Kupfer-, Chrom-Katalysators. In der DE-PS 1 193 671 wird die Herstellung von Polyethern mit Amino-Endgruppen durch Hydrierung von cyanethylierten Polyoxypropylenethern beschrieben. Weitere Methoden zur Herstellung von Polyoxyalkylen-(Polyether)-aminen sind in US-PS 3 155 728, US-PS 3 236 895 und FR-PS 1 551 605 beschrieben. In der FR-PS 1 466 708 wird beispielsweise die Herstellung von sekundäre Amino-Endgruppen aufweisenden Polyethern beschrieben.

Höhermolekulare Polyhydroxypolyether können durch Reaktion mit Isatosäureanhydrid in die entsprechenden Anthranilsäureester überführt werden, wie dies beispielsweise in DE-OS 2 019 432, DE-OS 2 619 840, US-PS 3 808 250, US-PS 3 975 428 oder US-PS 4 016 143 beschrieben ist. Auf diese Weise entstehen Polyether mit endständigen aromatischen Aminogruppen.

Durch Umsetzung von NCO-Prepolymeren auf Basis von Polyhydroxypolyethern mit Hydroxylgruppen aufweisenden Enaminen, Aldiminen oder Ketiminen und anschließende Hydrolyse erhält man gemäß DE-OS 2 546 536 bzw. US-PS 3 865 791 höhermolekulare, endständige Aminogruppen aufweisende Verbindungen.

Bevorzugt eingesetzt werden Aminopolyether, die z.B. nach DE-OS 2 948 419 durch Hydrolyse von endständige Isocyanatgruppen aufweisenden Verbindungen erhalten werden. Bei diesem Verfahren werden vorzugsweise zwei oder drei Hydroxylgruppen aufweisende Polyether mit Polyisocyanaten zu NCO-Prepolymeren umgesetzt und in einem zweiten Schritt die Isocyanatgruppe durch Hydrolyse in eine Aminogruppe überführt.

Die erfindungsgemäß einzusetzenden "Aminopolyether" stellen oftmals Gemische der beispielhaft genannten Verbindungen dar und weisen (im statistischen Mittel) zwei bis drei endständige, gegenüber Isocyanatgruppen reaktionsfähige Gruppen auf.

Die beispielhaft genannten "Aminopolyether" können beim erfindungsgemäßen Verfahren gegebenenfalls auch in Abmischung mit Aminogruppen-freien Polyhydroxypolyethern der beispielhaft genannten Art eingesetzt werden.

Bei den Kettenverlängerungsmitteln bzw. Vernetzungsmitteln b2), die im allgemeinen in einer Menge von bis zu 80, vorzugsweise von bis zu 65 und insbesondere von10 bis 60 Gew.-%, bezogen auf das Gesamtgewicht der Komponente b) eingesetzt werden, handelt es sich vorzugsweise um niedermolekulare Polyole bzw. Polyamine des obengenannten Molekulargewichtsbereichs.

Geeignete niedermolekulare Polyhydroxylverbindungen b2) sind beispielsweise Ethylenglykol, 1,2-Dihydroxypropan, 1,3-Dihydroxypropan, 1,2-Dihydroxybutan, 1,4-Dihydroxybutan, 1,6-Dihydroxyhexan, 1,10-Dihydroxydecan, Diethylenglykol, Triethylenglykol, Dipropylenglykol, Tripropylenglykol, Glycerin, Trimethylolpropan oder beliebige Gemische derartiger Polyhydroxylverbindungen.

Bei den Polyaminen, die als Komponente b2) eingesetzt werden können, handelt es sich vorzugsweise um Diamine mit ausschließlich aromatisch gebundenen, primären oder sekundären, vorzugsweise primären Aminogruppen des Molekulargewichtsbereichs 108 bis 399, wie z.B. 1,4-Diaminobenzol, 2,4-Diaminotoluol, 2,4'-und/oder 4,4'-Diaminodiphenylmethan, 3,3'-Dimethyl-4,4'-diamino-diphenylmethan oder 4,4'-Diaminodiphenylpropan-(2,2), bzw. beliebige Gemische derartiger Diamine.

Bei den bevorzugten Diaminen b2) handelt es sich jedoch um solche aromatische Diamine, die zumindest in jeweils einer ortho-Stellung zu den Aminogruppen einen Alkylsubstituenten aufweisen, insbesondere um solche, die in ortho-Stellung zu der ersten Aminogruppe mindestens einen Alkylsubstituenten und in ortho-Stellung zur zweiten Aminogruppen zwei Alkylsubstituenten mit jeweils 1 bis 4 Kohlenstoffatomen, aufweisen, besonders bevorzugt um solche, die in jeweils mindestens einer ortho-Stellung zu den Aminogruppen einen Ethyl-, t-Butyl-, n-Propyl-und/oder iso-Propyl-Substituenten und gegebenenfalls in weiteren ortho-Stellungen zu den Aminogruppen Methylsubstituenten aufweisen. .

Beispiele für bevorzugte bzw. besonderes bevorzugte Diamine sind 2,4-Diaminomesitylen, 1,3,5-Triethyl-2,4-diaminobenzol, 1,3,5-Triisopropyl-2,4-diaminobenzol, 1-Methyl-3,5-diethyl-2,6-diaminobenzol, 4,6-Dimethyl-2-ethyl-2,3-diaminobenzol, 3,5,3',5'-Tetraethyl-4 ,4'-diaminodiphenylmethan, 3,5,3',5'-Tetraisopropyl-4,4'-diamino-diphenylmethan oder 3,5-Diethyl-3',5'-diisopropyl-4,4'-diaminodiphenylmethan. Besonders bevorzugte Diamine b2) sind 1-Methyl-3,5-diethyl-2,4-diaminobenzol und dessen technischen Gemische mit 1-Methyl-3,5-diethyl-2,6-diaminobenzol, die im allgemeinen bis zu 35 Gew.-%, bezogen auf Diamingemisch, des letztgenannten Isomeren enthalten.

Die beispielhaft genannten Diamine können selbstverständlich auch im Gemisch mit den oben beispielhaft genannten Polyhydroxylverbindungen als Komponente b2) zum Einsatz gelangen.

Neben den beispielhaft genannten Aufbaukomponenten b) können beim erfindungsgemäßen Verfahren auch andere höhermolekulare Verbindungen mit gegenüber Isocyanat gruppen reaktionsfähigen Gruppen als Komponente b1) bzw. als Teil der Komponente b1) zum Einsatz gelangen. Hierzu gehören beispielsweise Polythioether, Polythiomischether, Polythioetherester, Polythioetheresteramide, Polyacetale, Hydroxylgruppen aufweisende Polycarbonate, Polyesteramide, Polyamide, Urethan-oder Harnstoffgruppen aufweisende Polyhydroxylverbindungen, natürliche Polyole wie beispielsweise Rizinusöl, Kohlenhydrate oder Stärke.

Vertreter von geeigneten Aufbaukomponenten b) sind im übrigen in High Polymers, Vol. XVI, "Polyurethanes, Chemistry and Technology", verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München 1966, z.B. auf den Seiten 45 bis 71, beschrieben.

Bei der erfindungswesentlichen Komponente c) handelt es sich um Salze aus (i) gesättigten oder ungesättigten aliphatischen oder cycloaliphatischen Carbonsäuren oder Carbonsäuregemischen mit im Mittel mindestens 8, vorzugsweise 12 bis 36 und besonders bevorzugt 12 bis 24 Kohlenstoffatomen und (ii) tert. Aminen der vorstehend genannten allgemeinen Formel. Bevorzugt handelt es sich bei der Komponente (i) um aliphatische, gegebenenfalls ungesättigte Monocarbonsäuren mit 12 bis 18 C-Atomen.

Geeignete Säuren (i) sind natürliche oder synthetische Monocarbonsäuren bzw. natürliche Fettsäuregemische, wie z.B. Abietinsäure, Palmitinsäure, Stearinsäure, Ölsäure, Elaidinsäure, Linolsäure, Rizinolsäure, Fettsäureester der Rizinolsäure, insbesondere solche von Fettsäuren mit mehr als 12 C-Atomen, Polyrizinolsäureester, Linolensäure oder auch technisch anfallende Fettsäuregemische, wie Spermölfettsäure, Tranfettsäure, Talgfettsäure, Sojaölfettsäure, Palmkernfettsäure, Erdnußfettsäure, Tallölfettsäure, Rizinensäure usw. Bevorzugt sind bei Raumtemperatur flüssige Fettsäuren bzw. Fettsäuregemische, insbesondere Ölsäure und/oder vorwiegend Ölsäure enthaltende technische Fettsäuregemische, etwa Sojaölfettsäure, Tallölfettsäure, Rizinensäuren sowie Ester aus 1 Mol Ölsäure und 1 - 3 Mol Rizinolsäure.

Bei der Aminkomponente (ii) der erfindungswesentlichen Trennmittel c) handelt es sich um Verbindungen der obengenannten allgemeinen Formel, die keine Amid-oder Estergruppen im Molekül aufweisen. Die Amine können aromatischer, araliphatischer, cycloaliphatischer oder aliphatischer Natur sein. Vorzugsweise werden solche tert. Amine verwendet, deren Substituenten ausschließlich aliphatischer Natur sind. Das atomare Verhältnis von tertiärem Stickstoff zu Kohlenstoff ist stets kleiner als 1:12.

Geeignete tert. Amine (ii) sind beispielsweise N,N-Dialkylfettamine wie N,N-Dimethyldodecylamin, N,N-Dimethyltetradecylamin, N,N-Dimethylhexadecylamin, N,N-Dimethyloctadecylamin, N,N-Dimethylkokosfettamin, N,N-Dimethylstearylamin, N-Methyldistearylamin, N,N-Dimethylsojaamin, N,N-Dimethyltalgfettamin, N,N-Dimethylspermöl fettamin, sowie die höheren N,N-Dialk(en)yl-fettamine mit identischen oder unterschiedlichen $C_1$-$C_{18}$-vorzugsweise $C_1$-$C_4$-Alkyl-und/oder $C_1$-$C_{18}$-vorzugsweise $C_1$-$C_4$-Alkenylgruppen als Substituenten der basischen Stickstoffatome; Ethoxylierungs-und/oder Propoxylierungsprodukte von Fettaminen wie die Umsetzungsprodukte von Oleylamin, Kokosfettamin, Stearylamin, Talgfettamin, Octadecylamin, Talgfettoleylamin oder anderen Fettaminen mit 2 bis 25 Mol Ethylenoxid und/oder Propylenoxid pro Mol Fettamin.

Die Herstellung der Trennmittel c) kann durch einfaches Abmischen der Einzelkomponenten (i) und (ii) erfolgen, wobei gegebenenfalls erhöhte Temperaturen bis zu 80°C zur Anwendung gelangen.

Pro Mol tertiäres Amin (ii) soll mindestens 1 Mol der Fettsäurekomponente (i) zum Einsatz gelangen, bevorzugt werden, bezogen auf die tertiären Aminogruppen, stöchiometrische oder bis zu 200 Mol-% überstöchiometrische Fettsäuremengen eingesetzt.

Als erfindungsgemäß gegebenenfalls mitzuverwendende Hilfs-und Zusatzmittel d) kommen beispielsweise d1) Wasser und/oder leichtflüchtige organische Substanzen als Treibmittel in Betracht. Geeignete organische Treibmittel sind beispielsweise Aceton, halogensubstituierte Alkane wie Methylenchlorid, Chloroform, Monofluortrichlormethan, Chlordifluormethan, Dichlordifluormethan, Butan, Hexan, Heptan oder Dimethylether. Auch Verbindungen, die bei erhöhter Temperatur Stickstoff oder Kohlendioxid abspalten sind als Treibmittel geeignet.

Als weitere, gegebenenfalls mitzuverwendende Hilfs-und Zusatzmittel d) kommen d2) Katalysatoren der an sich bekannten Art in Betracht, wie beispielsweise tertiäre Amine wie Triethylamin, N,N-Dimethylbenzylamin, Triethylendiamin, permethyliertes Diethylentriamin oder 1,2-Dimethylimidazol; einbaufähige tert. Amine wie z.B. Triethanolamin, Triisopropanolamin, N-Methyldiethanolamin; Katalysatoren mit Kohlenstoff-Silicium-Bindungen wie z.B. die in der DE-PS 1 229 290 beschriebenen Verbindungen; stickstoffhaltige Basen wie z.B. Tetraalkylammoniumhydroxide; Alkalihydroxide oder -phenolate wie Natriumhydroxid, Kaliumhydroxid, Natriumphenolat oder Kaliumphenolat; Alkalialkoholate wie z.B. Natriummethylat; organische Metallverbindungen, insbesondere organische Zinnverbindungen wie Zinn(II)salze von Carbonsäuren wie Zinn(II)-acetat, Zinn(II)octoat, Zinn(II)ethylhexoat und Zinn(II)-laurat und die Dialkylzinnsalze von Carbonsäuren, wie z.B. Dibutylzinndiacetat, Dibutylzinn-dilaurat, Dibutylzinnmaleat oder Dioctylzinndiacetat in Betracht.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die Katalysatoren werden in der Regel in einer Menge zwischen etwa 0,001 und 10 Gew.-%, bezogen auf die Menge an Verbindungen mit mindestens zwei gegenüber Isocyanaten reaktionsfähigen Wasserstoffatomen von einem Molekulargewicht von 62 bis 10 000, eingesetzt.

Weitere gegebenenfalls mitzuverwendende Hilfs-und Zusatzmittel d) sind beispielsweise d3) oberflächenaktive Zusatzstoffe (Emulgatoren und Schaumstabilisatoren). Als Emulgatoren kommen z.B. die Natriumsalze von Ricinusölsulfonaten oder auch von Fettsäuren oder Salze von Fettsäuren mit Aminen wie ölsaures Diethylamin oder stearinsaures Diethanolamin in Frage. Auch Alkali-oder Ammoniumsalze von Sulfonsäuren wie etwa von Dodecylbenzolsulfonsäure oder Dinaphthylmethandisulfonsäure oder auch von Fettsäuren wie Ricinolsäure oder von polymeren Fettsäuren können als oberflächenaktive Zusatzstoffe mitverwendet werden.

Weitere gegebenenfalls mitzuverwendende Hilfs-und Zusatzmittel d) sind beispielsweise d4) Schaumstabilisatoren, vor allem wasserlösliche Polyethersiloxane. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in der US-Patentschrift 27 64 565 beschrieben.

Weitere gegebenenfalls mitzuverwendende Hilfs-und Zusatzmittel d) sind insbesondere auch die an sich bekann ten inneren Formtrennmittel des Standes der Technik, beispielsweise solche, wie sie in DE-OS 1 953 637, DE-OS 2 121 670, DE-OS 2 431 968 oder in BE-PS 782 942 beschrieben sind, insbesondere das Ölsäure-oder Tallölfettsäuresalz des amidgruppenhaltigen Amins, welches durch Umsetzung von N,N-Dimethylaminopropylamin mit Ölsäure oder Tallölfettsäure zugänglich ist. Ferner können solche Trennmittel zusätzlich Verwendung finden, die in das Kunststoffgerüst eingebaut werden können, wie sie beispielsweise in DE-OS 2 305 276 oder DE-OS 2 356 692 beschrieben sind.

Schließlich kommen als gegebenenfalls mitzuverwendende Hilfs-und Zusatzmittel d) auch Reaktionsverzögerer, z.B. sauer reagierende Stoffe wie Salzsäure oder organische Säurehalogenide, ferner Zellregler den an sich bekannten Art wie Paraffie oder Fettalkohole oder Dimethylpolysiloxane sowie Pigmente oder Farbstoffe und Flammschutzmittel der an sich bekannten Art, z.B. Trischlorethylphosphat oder Ammoniumphosphat und -polyphosphat, ferner Stabilisatoren gegen Alterungs-und Witterungseinflüsse, Weichmacher und fungistatisch und bakteriostatisch wirkende Substanzen, Füllstoffe wie Bariumsulfat, Kieselgur, Ruß oder Schlämmkreide in Betracht.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs-und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103 bis 113 beschrieben.

Bei der Durchführung des erfindungsgemäßen Verfahrens kommt die Polyisocyanatkomponente a) in solchen Mengen zum Einsatz, die einer NCO-Kennzahl von 70 bis 160, vorzugsweise 90 bis 110 entsprechen. Die NCO-Kennzahl bezeichnet hierbei den Quotienten aus Anzahl an NCO-Gruppen dividiert durch die Anzahl an gegenüber Isocyanatgruppen reaktionsfähigen Gruppen multipliziert mit 100, wobei primäre Aminogruppen als monofunktionelle Gruppen in die Berechnung eingehen. Das erfindungsgemäße Verfahren eignet sich insbesondere zur Herstellung von gegebenenfalls Harnstoffgruppen aufweisenden Polyurethankunststoffen bzw., bei ausschließlicher Verwendung von Aminogruppen aufweisenden Reaktionskomponenten b) zur Herstellung von Kunststoffen auf Polyharnstoff-Basis. Es ist jedoch auch möglich, jedoch weniger bevorzugt, nach dem erfindungsgemäßen Verfahren Isocyanuratgruppen aufweisenden Kunststoffe der genannten Art herzustellen. Hierzu kommen die Reaktionspartner unter Einhaltung von NCO-Kennzahlen bis zu 1500, vorzugsweise von 160 bis 1500 und insbesondere von 800 bis 1200 zum Einsatz, wobei gleichzeitig durch Mitverwendung eines Trimerisierungskatalysators der an sich bekannten Art (beispielsweise Kaliumacetat oder eine als Trimerisie rungskatalysator wirksame Mannichbase) dafür Sorge getragen wird, daß gleichzeitig neben der Isocyanat-Polyadditionreaktion eine Trimerisierungsreaktion der überschüssigen Isocyanatgruppen stattfindet.

Bei der Durchführung des erfindungsgemäßen Verfahrens kommen die erfindungswesentlichen Trennmittel c) in einer Menge von 0,1 bis 20, vorzugsweise 0,3 bis 9 Gew.-%, bezogen auf das gesamte Reaktionsgemisch, zum Einsatz.

Die Umsetzung wird in geschlossenen Formen durchgeführt. Es kommen sowohl Metallformen (Stahl oder Aluminium) als auch Kunststofformen (z.B. auf Epoxidharzbasis) in Betracht. Das aus den Einzelkomponenten a) bis d) bestehende Reaktionsgemisch wird kurz vor Befüllen der Form in an sich bekannter Weise durch Vermischen der Einzelkomponenten hergestellt,wobei im allgemeinen die Komponenten c) und d) der Komponente b) vorab zugemischt werden. Das erfindungsgemäße Verfahren eignet sich sowohl zur Herstellung vom kompakten als auch von geschäumten Formkörpern, d.h. die Dichte der resultierenden füllstofffreien Formkörper liegt innerhalb des Dichtebereichs von 300 bis 1200 g/cm³. Im Falle der Herstellung von Schaumstoffen wird die Formverschäumung so durchgeführt, daß das Formteil eine kompakte Haut und einen zelligen Kern aufweist. Erfindungsgemäß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter Überladung gearbeitet: eine derartige Verfahrensweise ist z.B. aus der US-Patentschrift 31 78 490 oder aus der US-Patentschrift 31 82 104 bekannt.

Erfindungsgemäß können auch kalthärtende Schaumstoffe hergestellt werden (vgl. britische Patentschrift 11 62 517, deutsche Offenlegungsschrift 21 53 086).

Die Verarbeitung der Reaktionskomponenten a) bis d) kann nach dem Einstufenverfahren, dem Prepolymerverfahren oder dem Semiprepolymerverfahren erfolgen, wobei man sich oft maschineller Einrichtungen bedient, z.B. solcher, die in der US-Patentschrift 2 764 565 beschrieben werden, besonders bevorzugt wird nach der Methode der Reaktionsspritzgußtechnik gearbeitet. Hierbei wird vorzugsweise die Polyisocyanatkomponente a) mit einem Gemisch der Komponente b), c) und d) vermischt und in die Form eingetragen.

Die erfindungsgemäßen Verfahrensprodukte können in harter Einstellung zur Herstellung von Möbelteilen, Karosserieteilen von Fahrzeugen, technischen Geräten und Bauelementen Verwendung finden, sowie in halbharter bis weicher Einstellung zur Herstellung von Sicherheitspolsterungen im Automobilbau, elastischen Schuhsohlen, Stoßfängern usw.

Im folgenden sei das erfindungsgemäße Verfahren beispielhaft beschrieben. Die angegebenen Teile sind Gewichtsteile, sofern nicht anders vermerkt.

## Beispiele

### Herstellung der Trennmittel:

Zur Herstellung der Trennmittel werden Gemische aus 1 Äquivalent der Aminverbindung und 1 Äquivalent der Fettsäuren ca. 1/2 Stunde bei 60°C gerührt. Die Reihenfolge der Vermischung der beiden Komponenten ist beliebig. Im allgemeinen brauchen bei der Herstellung der in den meisten Fällen als Flüssigkeiten oder niedrigschmelzende Feststoffe anfallenden Salze, keine Lösungsmittel zugesetzt zu werden.

Werden Amin-oder Säuregemische mit nicht eindeutiger Zusammensetzung eingesetzt, so wird das Äquivalentgewicht dieser Gemische durch eine Säure-Base-Titration vor der Reaktion ermittelt. Durch die Hydrophobie der Ausgangssubstanzen bedingte Fehler von ± 5 % sind dabei ohne merkliche Auswirkung auf die Eigenschaften der Endprodukte.

Als Trennmittel werden beispielhaft Salze folgender Zusammensetzung verwendet:

| Substanz Nr. | Amin | Äquivalent-Gewicht | Säure | Äquivalent-Gewicht |
|---|---|---|---|---|
| 1 | (R)Genamin 10 R 302 D(7) | 185 | Ölsäure(1) | 282,5 |
| 2 | " 12 R 302 D(8) | 215 | " | 282,5 |
| 3 | " 14 R 302 D(9) | 248,5 | " | 282,5 |
| 4 | " 16 R 302 D(10) | 279,2 | " | 282,5 |
| 5 | " 18 R 302 D(11) | 290,4 | " | 282,5 |
| 6 | " 20/22 R 320 D(12) | 337,5 | " | 282,5 |
| 7 | " 10 R 302 D | 185 | (R)Nouracid LD 65(2) | 282 |
| 8 | " 12 R 302 D | 215 | " | 282 |
| 9 | " 14 R 302 D | 248,5 | " | 282 |
| 10 | " 16 R 302 D | 279,2 | " | 282 |
| 11 | " 18 R 302 D | 290,4 | " | 282 |
| 12 | " 20/22 R 302 D | 337,5 | " | 282 |
| 13 | " 12 R 302 D | 215 | (R)Nouracid LE 80(3) | 280,5 |
| 14 | " 12 R 302 D | 215 | " DE 656(4) | 287 |
| 15 | " 12 R 302 D | 215 | " DE 402(5) | 284 |
| 16 | " 12 R 302 D | 215 | " DZ 453(6) | 285,5 |

1) Ölsäure ® Edenor Ti 05 der Fa. Unichema

2) Leinölfettsäure der Fa. Akzo Chemie GmbH, Emmerich
mit 14 % ges. Fettsäuren C12-18
21 % Ölsäure
25 % Linolsäure
40 % Linolensäure

3) Leinölfettsäure der Fa. Akzo Chemie GmbH, Emmerich
mit 13 % ges. Fettsäuren C12-18
20 % Ölsäure
17 % Linolsäure
50 % Linolensäure

4) Ricinenfettsäure der Fa. Akzo Chemie GmbH, Emmerich
mit 3 % ges. Fettsäuren C12-18
6 % Ölsäure
26 % Linolsäure
65 % Linolensäure

5) Ricinenfettsäure der Fa. Akzo Chemie GmbH, Emmerich
mit 10 % ges. Fettsäuren C12-18
17 % Ölsäure
48 % Linolsäure
25 % konj. C18-Diensäuren

6) Ricinenfettsäure der Fa. Akzo Chemie GmbH, Emmerich
mit 6 % ges. Fettsäuren C12-18
21 % Ölsäure
35 % Linolsäure
34 % konj. C18-Diensäuren
3 % Linolensäure
1 % ges. Fettsäuren C>18

7) tert. Amin der Fa. Hoechst, Frankfurt,
mit ≧95 % Dimethyldodecylamin

8) tert. Amin der Fa. Hoechst, Frankfurt,
mit ≧95 % Dimethyltetradecylamin,

9) tert. Amin der Fa. Hoechst, Frankfurt,
mit ≧90 % Dimethylhexadecylamin

10) tert. Amin der Fa. Hoechst, Frankfurt,
mit ≧95 % Dimethyloctadecylamin

11) tert. Amin der Fa. Hoechst, Frankfurt,
mit 10 % Dimethyloctadecylamin
15 % Dimethyleicosylamin
75 % Dimethyldocosylamin

12) tert. Amin der Fa. Hoechst, Frankfurt
Additionsprodukt aus Amingemisch 1 % Dodecylamin
4 % Tetradecylamin
12 % Hexadecylamin
83 % Octadecylamin
und ca. 8 Mol Ethylenoxid pro Mol Amingemisch

100 Gewichtsteile eines Polyolgemisches der OH-Zahl 415 bestehend aus
70,9 GT eines Polyethers der OH-Zahl 27, der durch Addition eines Gemisches aus 80 % Propylenoxid und 20 % Ethylenoxid an Trimethylolpropan erhalten worden ist, und
1,7 GT eines propoxylierten Ethylendiamins der OH-Zahl 790,
21,1 GT Ethylenglykol,
1,7 GT Polyetherpolysiloxan-Stabilisator (OS 50 Hersteller: Bayer AG, Leverkusen)
0,08 GT Dibutyl-Zinn-IV-laurat
0,34 GT 30 %ige Lösung von 1,4-Diazabicyclo-(2,2,2)-octan in Dipropylenglykol
4,2 GT innerem Trennmittel gemäß den Beispielen.

100 GT dieser Polyolmischung werden mit 111 GT eines urethanmodifizierten Polyisocyanatgemisches einer mittleren NCO-Funktionalität von 2,2 mit einem NCO-Gehalt von 28,5 Gew.-%, hergestellt durch Umsetzung von Polypropylenglykol des mittleren Molekulargewichts 218 mit einem Polyisocyanatgemisch bestehend aus 75 Gew.-Teilen 4,4'-Diisocyanatodiphenylmethan, 4 Gew.-Teilen 2,4'-Diisocyanatodiphenylmethan und 21 Gew.-Teilen an höherkernigen Polyisocyanaten der Diphenylmethanreihe, umgesetzt.

Das Polyolgemisch wird mit dem Polyisocyanat mittels eines Laboratoriumsrührers vermischt und auf eine offene, auf 60°C temperierte Form mit einem eingelegten Schwarzblech der Abmessungen 310 x 210 x 0,5 mm gegossen. Die Schwarzbleche wurden mit feiner Stahlwolle und Methylenchlorid entfettet und von Roststellen befreit. Die PUR-Mischung bindet nach etwa 20 bis 30 s ab. Nach 5 Minuten wird das Schwarzblech mit der PUR-Masse aus dem Werkzeug entnommen. Das PUR-Material kann ohne Anwendung eines internen Trennmittels nicht vom Schwarzblech abgerissen werden, da es sehr stark auf der Blechfläche haftet.

Bei Einsatz der internen Trennmittel (siehe Tabelle 1) in der angegebenen Konzentration kann das harte Formteil ohne zu haften vom Schwarzblech abgenommen werden.

## Ansprüche

1. Verfahren zur Herstellung von gegebenenfalls geschäumten Formkörpern mit einer geschlossenen Oberflächenschicht durch Umsetzung in geschlossenen Formen eines Reaktionsgemischs aus

a) organischen Polyisocyanaten,

b) Verbindungen mit gegenüber Isocyanatgruppen reaktionsfähigen Wasserstoffatomen des Molekulargewichtsbereichs 62 bis 10 000,

c) Formtrennmitteln bestehend aus Salzen aus (i) gesättigten oder ungesättigten aliphatischen oder cycloaliphatischen Carbonsäuren oder Carbonsäuregemischen mit (im statistischen Mittel) mindestens 8 Kohlenstoffatomen pro Molekül und (ii) tertiären Aminen,

und gegebenenfalls

d) weiteren, aus der Polyurethanchemie an sich bekannten Hilfs-und Zusatzmitteln,

dadurch gekennzeichnet, daß man als Trennmittel c) solche Salze verwendet, deren Aminkomponente (ii) aus tertiären Monoaminen oder Gemischen von tertiären Monoaminen der Formel

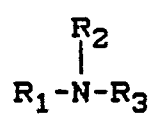

besteht, für welche

$R_1$ für einen gesättigten oder ungesättigten aliphatischen Kohlenwasserstoffrest mit mindestens 12 Kohlenstoffatomen steht und

$R_2$ und $R_3$ für gleiche oder verschiedene Reste stehen und gesättigte oder ungesättigte aliphatische Kohlenwasserstoffreste mit 1 bis 18 Kohlenstoffatomen und/oder gegebenenfalls Etherbrücken aufweisende Hydroxyalkylreste mit 2 bis 40 Kohlenstoffatomen bedeuten.

2. Verfahren gemäß Anspruch 1, dadurch gekennzeichnet, daß man solche Trennmittel c) verwendet, deren Carbonsäure-Komponente (i) aus gesättigten oder ungesättigten aliphatischen Monocarbonsäuren mit 12 bis 18 Kohlenstoffatomen besteht.

3. Verfahren gemäß Ansprüchen 1 und 2, dadurch gekennzeichnet, daß man solche Trennmittel c) verwendet, deren Carbonsäure-Komponente (i) aus Ölsäure oder Ölsäure enthaltenden technischen Fettsäuregemischen besteht.

4. Verfahren gemäß Ansprüchen 1 bis 3, dadurch gekennzeichnet, daß man die Trennmittel c) in einer Menge von 0,1 bis 20 Gew.-%, bezogen auf das Gesamtgewicht des Reaktionsgemischs, verwendet.

5. Verfahren gemäß Ansprüchen 1 bis 4, dadurch gekennzeichnet, daß man als Komponente d) oder als Teil der Komponente d) weitere innere Formtrennmittel der an sich bekannten Art verwendet.

6. Gemäß Ansprüchen 1 bis 5 erhaltene Formkörper.